Europäisches Patentamt

European Patent Office

Office européen des brevets

(19)

(11) Numéro de publication: **0 197 850**
**B1**

# (12) FASCICULE DE BREVET EUROPÉEN

(45) Date de publication du fascicule du brevet:
08.03.89

(51) Int. Cl.⁴: **B 60 G  17/02**

(21) Numéro de dépôt: **86400676.2**

(22) Date de dépôt: **27.03.86**

(54) **Essieu de véhicule automobile à correction d'assiette.**

(30) Priorité: **02.04.85  FR 8505298**

(43) Date de publication de la demande:
**15.10.86 Bulletin 86/42**

(45) Mention de la délivrance du brevet:
**08.03.89 Bulletin 89/10**

(84) Etats contractants désignés:
**DE GB IT**

(56) Documents cité:
**FR-A-2 522 750**
**FR-A-2 536 019**
**FR-E-93 594**
**GB-A-1 166 556**
**US-A-4 257 569**

(73) Titulaire: **AUTOMOBILES PEUGEOT, 75, avenue de
la Grande Armée, F-75116 Paris (FR)**
Titulaire: **AUTOMOBILES CITROËN, 62 Boulevard
Victor- Hugo, F-92200 Neuilly- sur- Seine (FR)**

(72) Inventeur: **Penot, Jean, 127, avenue de la
République, F-94800 Villejuif (FR)**

(74) Mandataire: **Boivin, Claude, 9, rue Edouard-
Charton, F-78000 Versailles (FR)**

EP 0 197 850 B1

LIBER, STOCKHOLM 1989

# Description

La présente invention concerne un essieu à suspension par barre de torsion et à correction d'assiette du type décrit dans le préambule de la revendication 1 et connu du document de brevet britannique GB-A-1 156 556.

Un essieu du type ci-dessus comporte en général, un élément solidaire de la caisse, préférentiellement une traverse, sur lequel sont montés pivotants des bras supports de roue, et des barres de torsion parallèles à l'axe de pivotement des bras, reliées par une extrémité aux bras et ancrées par l'autre extrémité à un levier monté pivotant par rapport à la caisse et dont le pivotement, en entraînant l'ancrage des barres, modifie l'assiette du véhicule.

L'invention concerne plus particulièrement un essieu du type ci-dessus dont le levier pivotant est relié à un écrou qui est fixe en rotation et qui est monté sur une vis reliée à l'arbre de sortie d'un moteur électrique, propre à faire pivoter le levier.

Dans la pratique, cette disposition nécessite en principe, l'utilisation d'un moteur électrique relativement puissant donc encombrant.

La présente invention a pour objet un essieu de véhicule automobile, dans lequel on peut, au contraire, utiliser un moteur électrique de faibles dimensions.

Cet essieu est caractérisé par les moyens décrits dans la partie caractérisante de la revendication 1.

Dans un mode de réalisation préféré de l'invention, essieu comporte des moyens exempts de frottement pour transformer le mouvement de translation de l'écrou en un mouvement de pivotement du levier.

On a décrit ci-après, à titre d'exemple non limitatif, un mode de réalisation de l'essieu selon l'invention, avec référence au dessin annexé dans lequel:

La Figure 1 représente une moitié de l'essieu en coupe axiale;
La Figure 2 en est une coupe transversale et montre les moyens de correction de l'ancrage.

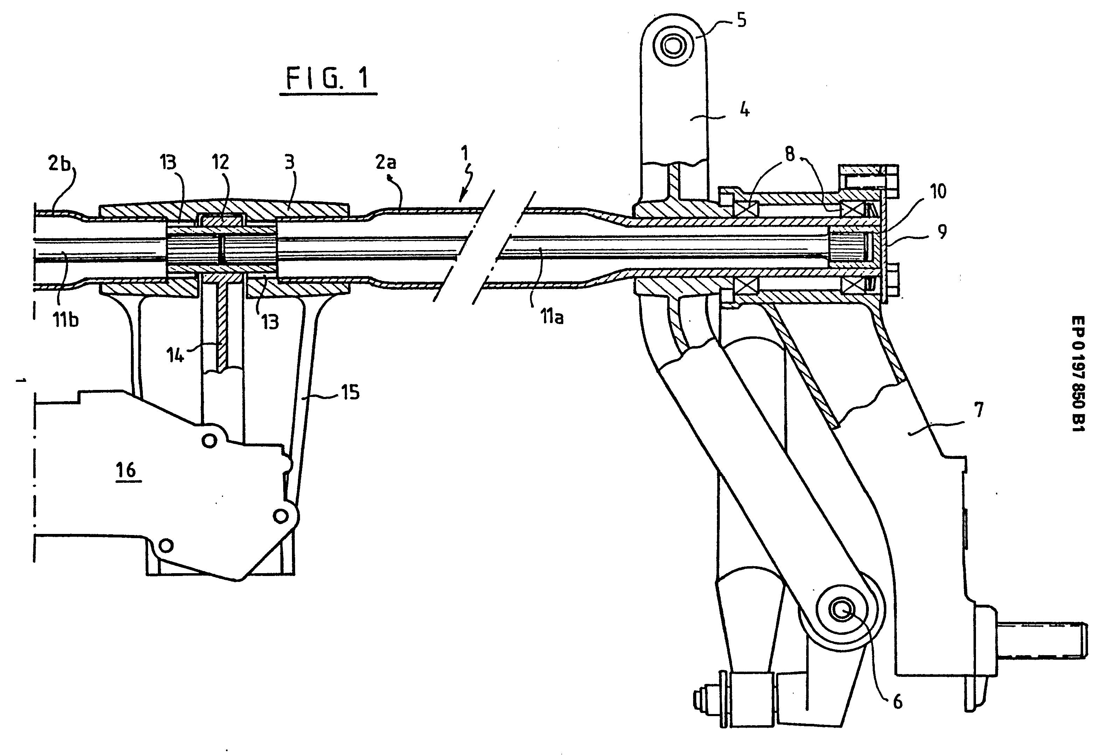

A la Figure 1, on voit un essieu 1 de véhicule automobile qui est constitué par une traverse formée de deux éléments tubulaires 2a et 2b reliés l'un à l'autre par un manchon 3. Chacun des éléments tubulaires 2a et 2b est solidaire d'un longeron 4 portant deux pattes 5 et 6 permettant sa fixation sur la caisse du véhicule. Un bras support de roue 7 est monté pivotant sur la traverse par l'intermédiaire de roulements 8. Sur ce bras support de roue est fixée une plaquette 9 qui porte un manchon cannelé 10 en prise avec l'une des extrémités cannelées d'une barre de torsion 11a ou 11b logée coaxialement dans la traverse; chaque barre de torsion a pour longueur la moitié de celle de la traverse.

Les secondes extrémités cannelées des barres de torsion 11a et 11b sont réunies l'une à l'autre par un manchon cannelé 12 qui est monté pivotant dans le manchon 3 par l'intermédiaire de roulements à aiguilles 13. Le manchon 12 est solidaire d'un levier 14 relié à un support 15 solidaire du manchon 3 par des moyens réglables décrits ci-après.

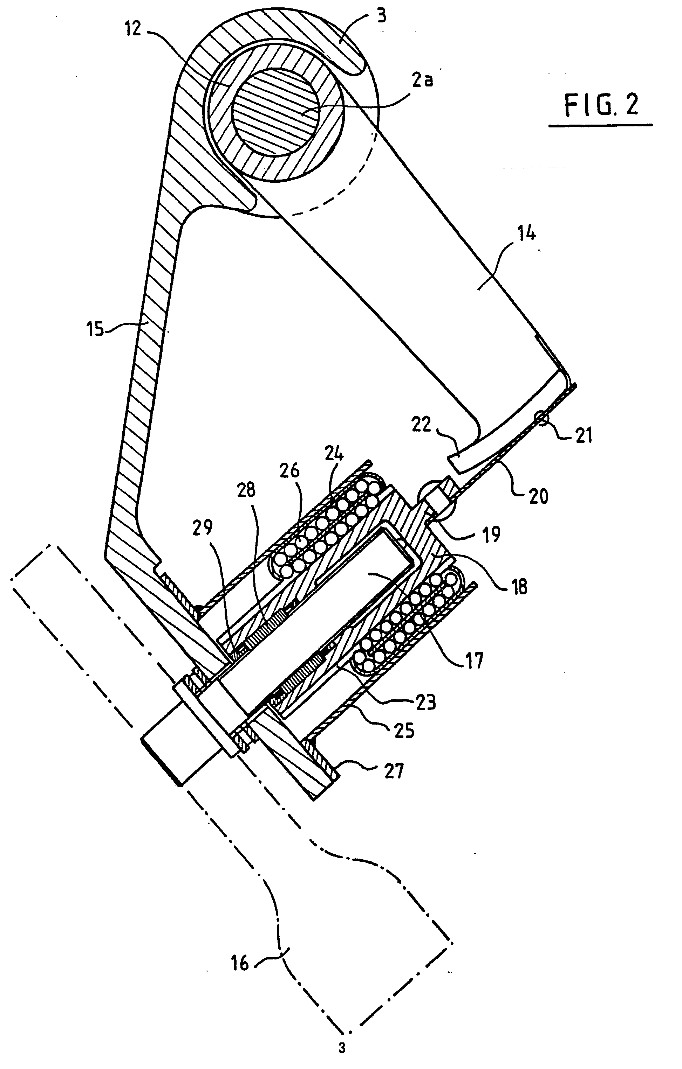

Comme on le voit plus particulièrement à la Figure 2, un moteur 16 monté sur le support 15 entraîne en rotation une vis 17 en prise avec un écrou allongé 18 fixe en rotation. Celui-ci porte à son extrémité une patte 19 sur laquelle est fixée l'une des extrémites d'une lame flexible 20 ayant son autre extrémité fixée en 21 à un secteur 22; ce secteur est solidaire du levier 14 et centré sur l'axe de la traverse.

L'écrou 18 comporte des rainures périphériques longitudinales 23. Ces rainures coopèrent avec des guides 24 dont est solidaire un cylindre 25 pour constituer des chemins de roulements à circulation de billes 26. Le cylindre 25 est muni d'une collerette 27 permettant sa fixation au support 15. Les billes 26 empêchent de tourner l'écrou 18 qui ne peut que glisser axialement par rapport au cylindre 25, et réduisent au minimum les frottements de glissement de cet écrou.

Par suite, quand le moteur électrique 16 entraîne la vis 17, l'écrou 18 se déplace longitudinalement en entraînant, par l'intermédiaire de la lame 20, le levier 14 qui pivote autour de l'axe de la traverse 2a - 2b en entraînant le manchon 12 et les barres de torsion 11a et 11b qui lui sont attelées.

Pour réduire au minimum les frottements entre la vis 17 et l'écrou 18, il est prévu un dispositif de type connu en soi, à recirculation à rouleaux, par exemple celui vendu dans le commerce sous le nom de "Transrol". Ce dispositif comprend des rouleaux 28 à gorge circulaire qui sont emprisonnés dans une cage 29 maintenant l'écart entre eux. Ces rouleaux sont en prise avec le filetage de la vis 17 et le taraudage de l'écrou 18. Les rouleaux 28 roulent entre l'écrou et la vis. Après un tour complet à l'intérieur de l'écrou, chaque rouleau progresse d'un pas; il tombe alors dans une rainure de l'écrou et une came le fait reculer sur le filet précédent.

# Revendications

1. Essieu à suspension par barre de torsion et à correction d'assiette comportant un élément solidaire de la caisse, préférentiellement une traverse (2a - 2b), sur lequel sont montés pivotants des bras supports de roue (7), des barres de torsion (11a - 11b) dont une extrémité est sollicitée par le pivotement des bras et l'autre extrémité ancrée à un levier (14) monté pivotant par rapport à l'élément solidaire de la caisse (2a - 2b), et un moteur électrique (16) porté par l'élément solidaire de la caisse (2a - 2b) et ayant son arbre de sortie relié à une vis (17) sur laquelle est monté un écrou (18) fixe en rotation et relié au levier pivotant (14), caractérisé en ce que des rouleaux (28) à gorge circulaire sont emprisonnés dans une cage (29) et en prise avec le filetage de la vis (17) ainsi qu'avec le taraudage de l'écrou et en ce que l'écrou (18) est entouré par un cylindre (25) muni de guides (24) qui coopèrent avec des rainures (23) de l'écrou pour constituer des chemins de roulement pour des billes (26).

2. Essieu selon la revendication 1, caractérisé en ce qu'il comporte en outre des moyens exempts de frottement pour transformer le mouvement de translation de l'écrou (18) en un mouvement de pivotement du levier (14).

3. Essieu selon la revendication 1 ou 2, caractérisé en ce que l'écrou (18) est relié par une lame flexible (20) à un secteur (22) qui est solidaire du levier (14) et coaxial à la traverse (2a - 2b).

4. Essieu selon l'une des revendications 1 à 3, dont l'élément solidaire de la caisse est une traverse (2a - 2b), caractérisé en ce qu'il comporte deux barres de torsion (11a - 11b) logées à l'intérieur de la traverse (2a - 2b), ancrées au milieu de cette traverse et admettant chacune une extrémité externe reliée à l'un des bras support de roue (7), les deux extrémités internes des deux barres étant reliées à un même levier (14) monté pivotant au milieu de la traverse.


## Patentansprüche

1. Achse für eine Radaufhängung mit Drehstabfederung und Niveauregelung mit einem kraftschlüssig mit der Karosserie verbundenen Element, vorzugsweise einer Traverse (2a - 2b), an dem die Rad-Lenkerarme (7) schwenkbar befestigt sind, Drehstabfedern (11a - 11b), deren eines Ende durch die Schwenkbewegung der Lenkerarme beansprucht ist und deren anderes Ende an einem Hebel (14) verankert ist, der in Bezug auf das kraftschlüssig mit der Karosserie verbundene Element (2a - 2b) schwenkbar montiert ist, und einem Elektromotor (16) der von dem kraftschlüssig mit der Karosserie verbundenen Element (2a - 2b) getragen wird und dessen Abtriebswelle mit einer Schraubenspindel (17) verbunden ist, auf welcher eine Schraubenmutter (18) angeordnet ist, die in Bezug auf Drehung fixiert und mit dem schwenkbaren Hebel (14) verbunden ist, dadurch gekennzeichnet, daß mit kreisförmigen Nuten versehene Rollen (28) in einem Käfig (29) eingeschlossen sind und im Eingriff mit dem Außengewinde der Schraubenspindel (17) sowie dem Innengewinde der Schraubenmutter stehen und daß die Schraubenmutter (18) von einem Zylinder (25) umgeben ist, der mit Führungen (24) versehen ist, die mit Nuten (23) in der Schraubenmutter zusammenwirken zur Bildung von Laufbahnen für Kugeln (26).

2. Achse nach Anspruch 1, dadurch gekennzeichnet, daß sie außerdem reibungsfreie Mittel zur Umwandlung der Translationsbewegung der Schraubenmutter (18) in eine Schwenkbewegung des Hebels (14) aufweist.

3. Achse nach Anspruch 1 oder 2, dadurch gekennzeichnet, daß die Schraubenmutter (18) über ein flexibles Blatt (20) mit einem Sektorstück (22) verbunden ist, das kraftschlüssig mit dem Hebel (14) verbunden und koaxial zur Traverse (2a - 2b) angeordnet ist.

4. Achse nach einem der Ansprüche 1 bis 3, bei der das kraftschlüssig mit der Karosserie verbundene Element eine Traverse (2a - 2b) ist, dadurch gekennzeichnet, daß sie zwei im Inneren der Traverse (2a - 2b) angeordnete Drehstabfedern (11a - 11b) aufweist, die in der Mitte dieser Traverse verankert sind und deren äußere Enden jeweils mit einem der Rad-Lenkerarme (7) verbunden sind, wobei die beiden inneren Enden der beiden Drehstabfedern mit dem selben Hebel (14) verbunden sind, der schwenkbar in der Mitte der Traverse montiert ist.


## Claims

1. Axle with torsion bar and trim correction suspension comprising an element fast with the bodywork, preferably a cross-piece (2a - 2b), on which are pivotally mounted wheel support arms (7), torsion bars (11 - 11b) one end of which is urged by the pivoting action of the arms and the other end anchored to a lever (14) mounted for pivoting with respect to the element fast with the body (2a - 2b) and an electric motor (16) carried by the element fast with the body (2a - 2b) and having its output shaft connected to a screw (17) on which is mounted a nut (18) secured against rotation and connected to the pivoting lever (14), characterized in that rollers (28) with circular groove are imprisoned in a cage (29) and engaged with the thread of the screw (17) as well as with the thread of the nut and in that the nut (18) is surrounded by a cylinder (25) having guides (24) wich cooperate with grooves (23) in the nut for forming running tracks for balls (26).

2. Axle according to claim 1, characterized in that it further comprises friction free means for transforming the translational movement of the nut (is) into a pivoting movement of the lever (14).

3. Axle according to claim 1 or 2, characterized in that the nut (is) is connected by a flexible blade (20) to a sector (22) which is secured to the lever (14) and coaxial to the cross-piece (2a - 2b).

4. Axle according to one of claims 1 to 3, in which the element fast with the body is a cross-piece (2a - 2b), characterized in that it comprises torsion bars (11a - 11b) housed inside the cross-piece (2a - 2b), anchored to the middle of this cross-piece and each having an external end connected to one of the wheel support arms (7), the internal ends of the two bars being connected to the same lever (14) mounted pivoting in the middle of the cross-piece.

FIG. 1

EP 0 197 850 B1

FIG. 2